# EUROPÄISCHE PATENTANMELDUNG

(11) **EP 0 803 396 A2**
(43) Veröffentlichungstag der Anmeldung: **29.10.1997**
(21) Anmeldenummer: 97106335.9
(22) Anmeldetag: 17.04.1997
(51) Int. Cl.: B60N 2/00

(54) **Fahrzeugsitz mit einer Bodenschienenmontage**

(30) Priorität: 26.04.1996 DE 19617935
(71) Anmelder: Gebr. Isringhausen GmbH & Co. KG, 32657 Lemgo (DE)
(72) Erfinder: Winkelhake, Bernd, 31737 Rinteln (DE); Granzow, Manfred, 32694 Dörentrup (DE)
(74) Vertreter: Lange, Gerd, Dipl.-Ing.

(57) **Zusammenfassung**

Die Erfindung betrifft einen Fahrzeugsitz mit einer Bodenschienenmontage, die es ermöglicht, in einem Fahrgastraum die Anzahl und/oder die Sitzanordnung durch Verschieben der Sitze auf den Bodenschienen zu verändern. Es wird vorgeschlagen, durch eine Kombination eines bestimmten Schienenprofils und einer Arretierungsmechanik zu erreichen, daß die Verschiebung der Sitze auf den Schienen mit großen Toleranzen leichtgängig und schmutzunempfindlich ausgeführt werden kann, wobei jedoch im arretierten Zustand eine vollständige Spiel- und Klapperfreiheit der Sitzmontage gewährleistet ist.

## Beschreibung

Die Erfindung betrifft einen Fahrzeugsitz mit einer Bodenschienenmontage in dem Fahrgastraum (Laderaum) eines Fahrzeuges.

Bei Fahrzeugen mit einem Fahrgastraum und/oder einem Laderaum, der wahlweise mit Fahrzeugsitzen je nach Bedarf in verschiedener Anzahl und/oder Reihenanordnung ausrüstbar oder wahlweise auch von einer Personenbeförderung auf Frachtbeförderung umrüstbar sein soll, bilden der Fahrzeugsitz (z,B. in form von Sitzbänken) mit seiner Bodenschienenmontage ein in sich geschlossenes (einheitliches) System.

Es ist bekannt, bei Fahrzeugsitzen mit einer Bodenschienenmontage mindestens zwei, zueinander parallele Bodenschienen vorzusehen, die auf dem Fahrzeugboden befestigt sind. Solche Bodenschienen sind als nach oben offene U-förmige Gleit- oder Rollschienen ausgebildet, bei denen die Profilränder etwas nach innen eingezogen sind, so daß in den Bodenschienen die Seitenträger des Sitzgestelles des Fahrzeugsitzes mittels Gleitern oder Rollen längsverschiebbar geführt sind und in wahlweisen Positionen entlang der Bodenschiene arretierbar sind. Die Arretierung erfolgt üblicherweise mittels Klemmschrauben oder Steckbolzen, die in den U-förmigen Bodenschienen verklemmt oder in vorgestanzten Stecklöchern eingesteckt werden.

Nachteilig bei solchen Systemen ist, daß insbesondere bei der Personenbeförderung die nach oben offenen Bodenschienen abgedeckt werden müssen (z.B. mittels eines Teppichbodens), damit sie für Personen keine Stolperfallen darstellen oder schmalere Schuhabsätze nicht in sie hineingetreten werden können. In technischer Hinsicht ist die Abdeckung der Bodenschienen ebenfalls erwünscht, um Verschmutzungen der Schienenlaufflächen zu vermeiden, die für eine präzise Gleit- oder Rollenführung der Fahrzeugsitze mit relativ engen Führungstoleranzen arbeiten, da diesbezüglich von der Bodenschienenbefestigung eine vollständige Spiel- und Klapperfreiheit verlangt wird und auch gewährleistet bleiben muß, daß trotz der engen Toleranzen das Umrüsten der Sitzanordnungen, d.h. das Auswechseln und/oder Verschieben der Sitze in den Bodenschienen stets leichtgängig möglich sein muß.

Aufgabe der Erfindung ist es, Fahrzeugsitze mit einer Bodenschienenmontage vorzuschlagen, die ohne eine kostenaufwendige Präzisionsführung dennoch spiel- und klapperfrei sind und die weitgehend unempfindlich gegen Verschmutzungen oder von ihnen ausgehenden Gefahren bei der Personenbeförderung sind.

Diese Aufgabe wird erfindungsgemäß dadurch gelöst, daß die Bodenschienen ein T-förmiges Querschnittsprofil aufweisen, dessen obere Deckfläche geschlossen und im wesentlichen planparallel zum Fahrzeugboden ausgerichtet ist, und daß die Seitenträger des Sitzes jeweils Zuganker aufweisen, die vorzugsweise beidseitig das T-Profil der Bodenschienen untergreifen, wobei zum Zwecke der Arretierung des Fahrzeugsitzes die Seitenträger mit den Zugankern mittels einer Hebelmechanik nach oben von den Bodenschienen abgedrückt werden derart, daß die Zuganker gegen die Unterseite des T-Profils der Bodenschienen form- oder kraftschlüssig verspannen.

Es ist zunächst ein genereller Vorteil, daß die vorgeschlagenen T-förmigen Bodenschienen sehr flach gebaut sein können, d.h. nur eine sehr geringe Aufbauhöhe über dem Fahrzeugboden benötigen, da sie nur von den (entsprechend der Materialstärke) relativ flachen Zugankern der Seitenträger des Sitzes untergriffen werden und die übrigen Führungsmittel der Seitenträger (wie z.B. Gleiter oder Rollen) nur auf der oberen Deckfläche der Bodenschienen laufen.

Die flachbauenden T-Profile der Bodenschienen sind in einer praxisgerechten Ausführung nur so hoch, daß sie einen beidseitig bis an die Bodenschienen verlegten Teppichboden (oder einen sonstigen Bodenbelag) nicht überragen. Eine Stolpergefahr geht von ihnen nicht aus.

Auch gewährleistet die obere geschlossene Deckfläche des T-Profils, daß die Bodenschienen weniger verschmutzen und daß schmalere Schuhabsätze grundsätzlich nicht in die Bodenschienen hineingetreten werden können. Eine zusätzliche Abdeckung der Bodenschienen ist nicht erforderlich.

Die Idee, die Seitenträger des Sitzes (mit den die T-förmigen Bodenschienen untergreifenden Zugankern) zum Zwecke der Arretierung des Sitzes mittels einer Hebelmechnaik von den Bodenschienen abzudrücken, ermöglicht es, in jeder Arretierungsposition des Sitzes eine spiel- und klapperfreie Befestigung des Sitzes auf den Bodenschienen zu erreichen, ohne daß diese als Präzisionsführungen ausgebildet sein müssen. Das verbilligt das System der Bodenschienenmontage erheblich, denn die auf der oberen Deckfläche der Bodenschienen laufenden Gleiter oder Rollen bedürfen nur zum Zwecke der Verschiebung auf den Bodenschienen keine exakte Schienenführung. Zum Verschieben der Sitze genügt eine mit großen Toleranzen gebaute Schienenführung, die mit einem größeren Spiel und entsprechend größeren Klappergeräuschen behaftet ist, aber dafür entsprechend leichtgängiger ist und bleibt. Erst im arretierten Zustand des Sitzes, d.h. im Zustand der Personenbeförderung muß die Befestigung des Sitzes spiel- und klapperfrei sein. Das ist bei dem erfindungsgemäßen Sitz und seiner Bodenschienenmontage gewährleistet.

Die vorgenannten großen Toleranzen, die die Schienenführung der Sitze erlaubt, ohne daß es bei der Sitzmontage und/oder beim Verschieben von Sitzanordnungen zu Funktionsstörungen kommt, hat auch den Vorteil, daß das neue System Unebenheiten des Fahrzeugbodens, auf dem die Bodenschienen befestigt sind, besser folgen kann.

Die Hebelmechanik zum Abdrücken der Seitenträger mit den Zugankern von der Bodenschienen in der jeweils gewünschten Arretierungsposition ist gemäß den Unteransprüchen 2 und 3 bevorzugt wie folgt ausgeführt.

Im vorderen Bereich der Seitenträger sind jeweils eine Laufrolle vorgesehen, die beim Verschieben des Sitzes auf den Deckflächen des T-Profils der Bodenschiene abrollt, wobei die Hebelmechanik durch den Seitenträger selbst gegeben ist, der beim Verschieben des Fahrzeugsitzes im hinteren Bereich angehoben wird, wodurch der vordere Bereich des Seitenträgers sich ausschließlich auf der vorderen Rolle abstützt, und der zum Zwecke der Arretierung des Fahrzeugsitzes mit seinem hinteren Bereich niedergedrückt wird, wodurch ein an dem Seitenträger befestigtes Klemmstück, das nahe der vorderen Laufrolle zwischen dem Seitenträger und der Bodenschiene positioniert ist, kraftschlüssig gegen die obere Deckfläche des T-Profils der Bodenschiene geklemmt wird.

Eine derartige Hebelmechanik hat ein sehr großes Übersetzungsverhältnis, so daß die Klemmkraft des Klemmstückes gegen die Bodenschiene sehr hoch ist. Die Klemmkraft wird durch den jeweiligen Zuganker, der das T-Profil der Bodenschiene untergreift, abgefangen.

Gemäß dem Unteranspruch 3 kann der niedergedrückte hintere Teil des Seitenträgers mittels eines lösbaren Rasthakens mit dem T-Profil der Bodenschiene verrasten. Eine solche direkte Verrastung des hinteren Teils des Seitenträgers auf der Bodenschiene ist möglich, da die Verrastung nur im Arretierungszustand des Sitzes besteht und der Sitz in seinem Arretierungszustand nicht mehr auf den Bodenschienen verschoben wird.

Andererseits muß bei der vorgenannten Ausführungsform der Erfindung der hintere Teil der Seitenträger (d.h. der hintere Teil des Sitzes) beim Verschieben auf den Bodenschienen im angehobenen Zustand manuell getragen werden, da der hintere Bereich der Seitenträger bei dieser Ausführungsform keine Rollen oder Gleitstücke o.dgl. besitzt.

Nach Anspruch 4 sieht eine weiter verbesserte Ausführungsform der Erfindung vor, daß die hinteren Bereiche der Seitenträger jeweils einen Roll- oder Schiebeschlitten aufweisen, der diesen Bereich der Seitenträger sowohl im angehobenen Zustand als auch im niedergedrückten Zustand trägt. Zu diesem Zweck ist zwischen dem Roll- oder Schiebeschlitten und dem hinteren Bereich der Seitenträger z.B. ein Traggestänge oder eineausfahrbare Gasdruckfeder anzuordnen, auf die sich der hintere Teil der Seitenträger im angehobenen Zustand abstützt.

Im niedergedrückten Zustand muß der hintere Bereich der Seitenträger mit dem Roll- oder Schiebeschlitten zug- und druckfest verrasten. Damit dies stets funktionssicher erfolgen kann ist nach Anspruch 4 vorgesehen, daß der Roll- oder Schiebeschlitten mittels eines Anlenkhebels mit dem hinteren Bereich des Seitenträgers verbunden ist derart, daß ein Druckstück des Anlenkhebels beim Niederdrücken des hinteren Bereichs des Seitenträgers ein Drucklager am Schlitten unterfährt und den Schlitten nach oben von der Bodenschiene abdrückt, so daß sich der oder die zugeordneten Zuganker gegen die Unterseite des T-Profils der Bodenschiene verspannen.

Nachfolgend wird ein Ausführungsbeispiel der Erfindung anhand der Zeichnungen näher beschrieben. Es zeigen:
- Fig. 1 und 2: die Seitenansicht eines Seitenträgers eines Fahrzeugsitzes im verschiebbaren Zustand (Fig. 1) und im arretierten Zustand (Fig. 2),
- Fig. 3, 4 und 5: Querschnitte durch den Seitenträger gemäß Fig. 1 und 2 entlang den Schnittlinien A-A, B-B und C-C.

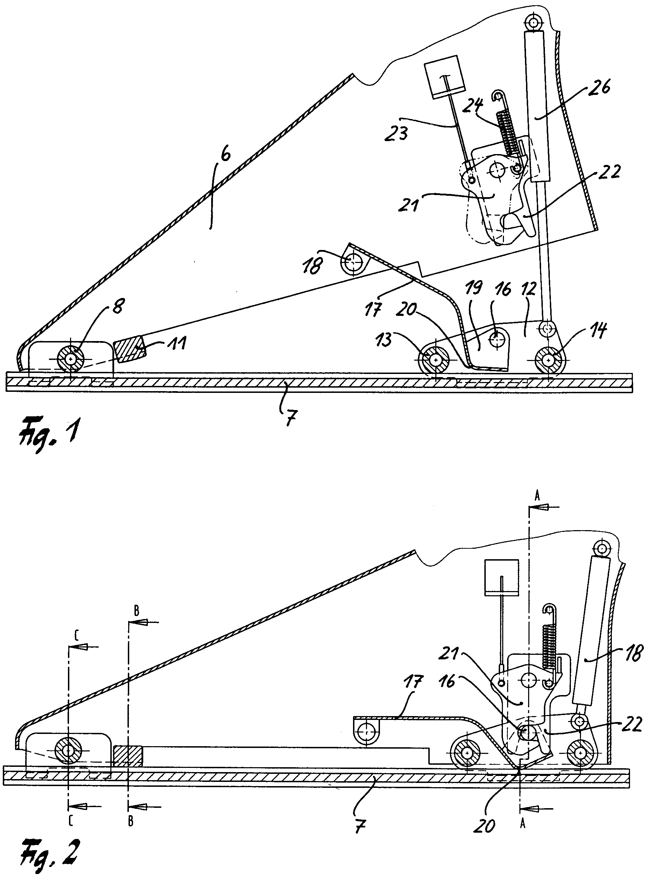

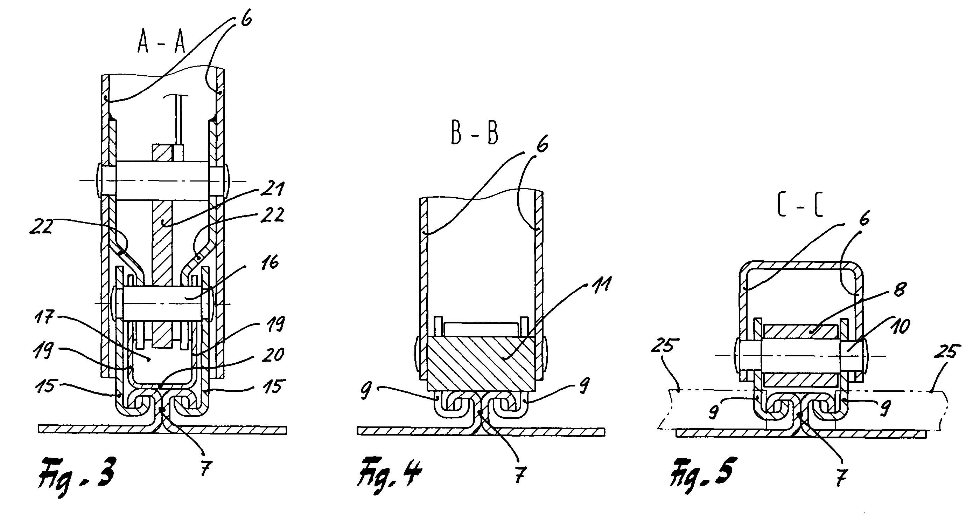

Fig. 1 zeigt in vereinfachter Darstellung den Seitenträger 6 eines Fahrzeugsitzes und die Bodenschiene 7, die im Querschnitt ein T-förmiges Profil besitzt, wie dies aus den Fig. 3 bis 5 ersichtlich ist.

Im vorderen Bereich des Seitenträgers 6 und im angehobenen (entarretierten) Zustand des Seitenträgers läuft die Rolle 8 auf der Deckfläche der Bodenschiene 7. Das T-Profil der Bodenschiene wird beidseitig von je einem Zuganker 9 untergriffen, wie dies die Fig. 5 zeigt. Der Zuganker ist auf der Achse 10 der Laufrolle 8 befestigt. Die Achse 10 ist in dem Seitenträger 6 gelagert.

Nahe der vorderen Laufrolle 8 ist zwischen dem Seitenträger 6 und der Bodenschiene 7 ein Klemmstück 11, z.B. ein elastischer Gummiblock, positioniert, der kraftschlüssig gegen die Deckfläche der Bodenschiene 7 geklemmt ist, sobald der hintere Teil des Seitenträgers niedergedrückt ist. Vergl. hierzu Fig. 2 und die Querschnitte gemäß Fig. 4 und Fig. 5. Die Fig. 4 zeigt das Klemmstück 11, das kraftschlüssig gegen die Deckfläche der Bodenschiene geklemmt ist, wodurch die Zuganker 9 kraftschlüssig gegen die Unterseite des T-Profils der Bodenschiene 7 verspannt sind. In diesem Zustand ist die Laufrolle 8 von der Deckfläche der Bodenschiene abgehoben (vergl. Querschnitt gemäß Fig. 5).

Im hinteren Bereich des Seitenträgers befindet sich ein Rollschlitten 12 mit den beiden Laufrollen 13 und 14. Der Rollschlitten besitzt wiederum zwei Zuganker 15, die von der Seite her jeweils das T-Profil der Bodenschiene 7 untergreifen (vergl. Fig. 3), wobei die Zuganker mit den Laufradachsen der Laufrollen 13, 14 und/oder mit der Anlenkachse 16 fest verbunden sind bzw. auf diesen Achsen zugfest gelagert sind.

Mittels der Anlenkachse 16 ist zugleich der Anlenkhebel 17 an dem Schlitten 12 angelenkt, dessen anderes Ende über die Anlenkachse 18 mit dem Seitenträger 6 verbunden ist. Auf diese Weise ist der Rollschlitten 12 dem Seitenträger 6 stets positionsmäßig zugeordnet, auch wenn der hintere Teil des Seitenträgers 6 angehoben ist (vergl. Fig. 1) und der Seitenträger entlang der Bodenschiene 7 verschoben wird.

Im angehobenen Zustand wird der hintere Teil des Seitenträgers von einer Gasdruckfeder 26 getragen, so daß das manuelle Tragen des hinteren Teils des Sitzes beim Verschieben auf den Bodenschienen entfällt.

Der vorgenannte Anlenkhebel 17 hat die Besonderheit, daß er durch entsprechende Formgebung und durch Seitenbleche 19 ein Druckstück 20 besitzt, das beim Niederdrücken des hinteren Bereichs des Seitenträgers 6 ein Drucklager (in diesem Fall die Anlenkachse 16) unterfährt und den Schlitten 12 nach oben von der Bodenschiene 7 abdrückt, so daß sich die zugeordneten Zuganker 15 gegen die Unterseite des T-Profils der Bodenschiene verspannen (vergl. hierzu Fig. 2 und Fig. 3).

Die Anlenkachse 16 dient zugleich als Fangbolzen für einen Fanghaken 21, der im hinteren Teil des Seitenträgers 6 gelagert ist und beim Niederdrücken des hinteren Teils mit dem Fangbolzen (Anlenkachse 16) verrastet. Damit dies störungsfrei erfolgt, ist je ein V-förmiges Justierstück 22 an den Innenseiten des Seitenträgers 6 befestigt, die beim Niederdrücken des hinteren Teils des Seitenträgers 6 die Anlenkachse 16 übergreifen und mit Bezug auf den Fanghaken justieren.

Der Fanghaken 21 kann mittels eines Bowdenzuges 23 gegen die Schließkraft der Zugfeder 24 gelöst werden.

Fig. 5 zeigt im Querschnitt, auf welche vorteilhafte Weise eine T-förmige Bodenschiene auf einem Fahrzeugboden mit einem Teppichboden verlegt werden kann. Beidseitig an das T-Profil kann der Teppichboden, der durch die strichpunktierten Linien 25 angedeutet ist, angeschlossen werden, so daß die Bodenschienen nahezu flächenbündig in dem Bodenbelag (Teppichboden) versenkt angeordnet sind. Hierdurch und infolge der nach oben geschlossenen Deckfläche der Bodenschienen ergeben sich die geringsten Gefahren für Personen und/oder die Verschmutzung der Bodenschienen. Da Teppichböden üblicherweise mit einem hochstehenden, jedoch leicht deformierbaren Flor oder einer Teppichschlinge versehen sind, behindert ein direkt an das Profil der Bodenschiene anschließender Teppichboden in keiner Weise die Fanghaken 9 und 15, die beim Verschieben eines Fahrzeugsitzes auf den Bodenschienen den Flor bzw. die Schlingen des Teppichbodens leicht zurückdrücken.

## Patentansprüche

1. Fahrzeugsitz mit einer Bodenschienenmontage in dem Fahrgastraum (Laderaum) eines Fahrzeuges,
- mit mindestens zwei zueinander parallelen Bodenschienen, die auf dem Fahrzeugboden befestigt sind,
- und mit Seitenträgern des Sitzgestells, die auf den Bodenschienen längsverschiebbar geführt sind
- und auf denen der Fahrzeugsitz in wahlweisen Positionen entlang der vorzugsweise über die Länge des Fahrgastraums durchlaufenden Bodenschienen arretierbar ist,
dadurch gekennzeichnet,
- daß die Bodenschienen (7) ein T-förmiges Querschnittsprofil aufweisen, dessen obere Deckfläche geschlossen und im wesentlichen planparallel zum Fahrzeugboden ausgerichtet ist,
- daß die Seitenträger (6) des Sitzes jeweils Zuganker (9, 15) aufweisen, die vorzugsweise beidseitig das T-Profil der Bodenschienen untergreifen,
- und daß zum Zwecke der Arretierung des Fahrzeugsitzes die Seitenträger mit den Zugankern mittels einer Hebelmechanik nach oben von den Bodenschienen abgedrückt werden derart, daß die Zuganker gegen die Unterseite des T-Profils der Bodenschienen form- oder kraftschlüssig verspannen.

2. Fahrzeugsitz mit einer Bodenschienenmontage nach Anspruch 1,
dadurch gekennzeichnet,
- daß die Seitenträger (6) jeweils im vorderen Bereich Laufrollen (8) aufweisen, die beim Verschieben des Sitzes auf den Deckflächen des T-Profils der Bodenschienen (7) abrollen, und denen jeweils ein Zuganker (9) zugeordnet ist
- und daß die Hebelmechanik zum Abdrücken der vorderen Laufrolle durch den Seitenträger (6) selbst gegeben ist, der zum Verschieben des Fahrzeugsitzes im hinteren Bereich angehoben wird, wodurch der vordere Bereich des Seitenträgers sich auschließlich auf der vorderen Laufrolle abstützt,
- und der zum Zwecke der Arretierung des Fahrzeugsitzes mit seinem hinteren Bereich niedergedrückt wird, wodurch ein an dem Seitenträger befestigtes Klemmstück (11), das nahe der vorderen Laufrolle (8) zwischen dem Seitenträger und der Bodenschiene positioniert ist, kraftschlüssig gegen die obere Deckfläche des T-Profils der Bodenschiene geklemmt wird.

3. Fahrzeugsitz mit einer Bodenschienenmontage nach Anspruch 2,
dadurch gekennzeichnet,
- daß der niedergedrückte hintere Teil des Seitenträgers mittels eines lösbaren Rasthakens mit dem T-Profil der Bodenschiene verrastet.

4. Fahrzeugsitz mit einer Bodenschienenmontage nach Anspruch 1 oder 2,
dadurch gekennzeichnet,
- daß die Seitenträger (6) jeweils im hinteren Bereich einen Roll- oder Schiebeschlitten (12) aufweisen, der mit fest an ihm angeordneten Zugankern (15) das T-Profil der Bodenschiene untergreift und der beim Verschieben des Sitzes auf den Deckflächen des T-Profils der Bodenschienen entlangfährt,
- daß der hintere Bereich des Seitenträgers im niedergedrückten Zustand mittels eines lösbaren Fanghakens (21) mit dem Roll- oder Schiebeschlitten (12) verrastet ist
- und daß der Roll- oder Schiebeschlitten bei gelöstem Fanghaken (21) im angehobenen Zustand des hinteren Bereichs des Seitenträgers mittels eines Anlenkhebels (17) geführt ist, der mit seinem einen Ende (18) am Seitenträger und mit seinem anderen Ende (16) an dem Roll- oder Schiebeschlitten angelenkt ist
- derart, daß ein Druckstück (20) des Anlenkhebels (17) beim Niederdrücken des hinteren Bereichs des Seitenträgers ein Drucklager (Anlenkachse 16) am Schlitten unterfährt und den Schlitten nach oben von der Bodenschiene abdrückt, so daß sich der zugeordnete Zuganker (15) gegen die Unterseite des T-Profils der Bodenschiene verspannt.
